# EUROPEAN PATENT SPECIFICATION

(11) **EP 2 236 235 B1**
(45) Date of publication and mention of the grant of the patent: **20.05.2015**
(21) Application number: 10157403.6
(22) Date of filing: 23.03.2010
(51) Int. Cl.: B23K 9/04, B23K 10/02, B23K 15/00, B23K 26/34, B23K 37/06, B22F 3/115, C23C 4/18

(54) **A high temperature additive manufacturing system for making near net shape airfoil leading edge protection with a cladded mandrel**
System zur Herstellung von Hochtemperaturzusatzstoffen zur Herstellung eines endkonturnahen Profileintrittskantenschutzes mit einem beschichteten Dorn
Système de fabrication d'additif à haute température pour protection de bord d'attaque de surface portante de coupe de haute précision avec un mandrin revêtu

(30) Priority: 24.03.2009 US 409904
(43) Date of publication of application: 06.10.2010
(73) Proprietor: General Electric Company, Schenectady, NY 12345 (US)
(72) Inventor: Peretti, Michael W., Cincinnati, OH 45215 (US); Trapp, Timothy, Cincinnati, OH 45215 (US)
(74) Representative: Cleary, Fidelma

(56) References cited:
- GB-A- 1 599 392
- GB-A- 2 245 514
- US-A- 4 237 361
- US-A- 4 782 206
- US-A1- 2006 248 718

## Description

Embodiments described herein generally relate to a high temperature additive manufacturing system according to the preamble of claim 1, for making near net shape airfoil leading edge protection and tooling systems for use therewith.

### BACKGROUND OF THE INVENTION

Many modem turbine engine airfoils, such as blades and vanes, are constructed of a composite laminate or molded fiber. Airfoil metal leading edge (herein "MLE") protective strips can be used to protect composite airfoils from impact and erosion damage that can often occur in the engine environment. In conventional practices, a v-shaped protective metallic strip is often wrapped around the leading edge and sides of the airfoil to provide such protection.

While MLE protective strips can be made from a variety of materials, titanium and titanium alloys are often utilized due to their favorable weight and mechanical properties. However, hot forming methods must be used to fabricate these titanium components. Hot forming typically involves multiple steps with intermediate chemical milling or machining. This can lead to high tooling costs, high yield losses, and environmentally unfriendly processing. These drawbacks are especially true when fabricating thin, complex geometries, such as MLE protective strips.

Additive manufacturing involves the buildup of a metal part or preform to make a net, or near net shape (NNS) component. This approach can make complex components from expensive materials for a reduced cost and with improved manufacturing efficiency. Generally, a freestanding component is built from a computer aided design (CAD) model. However, when the component has a thin and/or complex shape, it can be beneficial to build up the component on a tool for support.

When a high temperature, melt-based process, such as plasma transferred arc or laser cladding, is used as the additive method to make a NNS component, the tool must perform several functions: it must give shape to the part, it must control heat input to provide a uniform microstructure over the entire length of the component with the desired grain size, and it must conduct heat away from the deposit rapidly enough to prevent fusion of the deposited component to the tool. Additionally, the tool must not cause any contamination of the metallic deposit, as contamination can have a disastrous affect on the physical and mechanical properties of the component. This is especially true when working with titanium and titanium alloys.

More specifically, when titanium or titanium alloy is deposited, the risk of contamination of the deposit by the tooling is high due to the high melting point and reactive nature of titanium. Current practice utilizes a monolithic tool made from the same alloy that is being deposited (e.g. titanium or titanium alloy). While this approach helps mitigate the issue of contamination, it results in a very narrow process window for making a sound deposit without fusion of the deposit to the tool. This is because titanium is a relatively poor heat conductor when compared to other heat sink materials (e.g. refractory metals, mild steel, copper).

Accordingly, there remains a need for manufacturing and tooling systems that address and overcome the previously discussed issues associated with current MLE protective strip manufacturing.

GB 2,245,514 discloses a system generally corresponding to the preamble of claim 1 herein. US 4,782,206 discloses a method and apparatus for eliminating microfissure defects in shape melted austenitic components through close monitoring of a deposited weld bead shape.

### BRIEF DESCRIPTION OF THE INVENTION

The present invention provides a high temperature additive manufacturing system according to claim 1.

Embodiments herein also generally relate to high temperature additive manufacturing systems comprising a high temperature additive manufacturing device for providing a metallic deposit; and a tooling system comprising: a mandrel for receiving, and providing shape to, the metallic deposit; a metallic cladding applied to the mandrel for reducing contamination of the metallic deposit; and at least one cooling channel associated with the mandrel for removing heat from the system.

These and other features, aspects and advantages will become evident to those skilled in the art from the following disclosure.

### BRIEF DESCRIPTION OF THE DRAWINGS

There follows a detailed description of embodiments of the invention by way of example only with reference to the accompanying drawings, in which:
FIG. 1 is a schematic representation of one embodiment of a composite fan blade for a gas turbine engine in accordance with the description herein; and
FIG. 2 is a schematic cross-sectional representation of a portion of one embodiment of a high temperature additive manufacturing system in accordance with the description herein.

### DETAILED DESCRIPTION OF THE INVENTION

Embodiments described herein generally relate to high temperature additive manufacturing systems for making near net shape airfoil leading edge protective strips and tooling systems for use therewith.

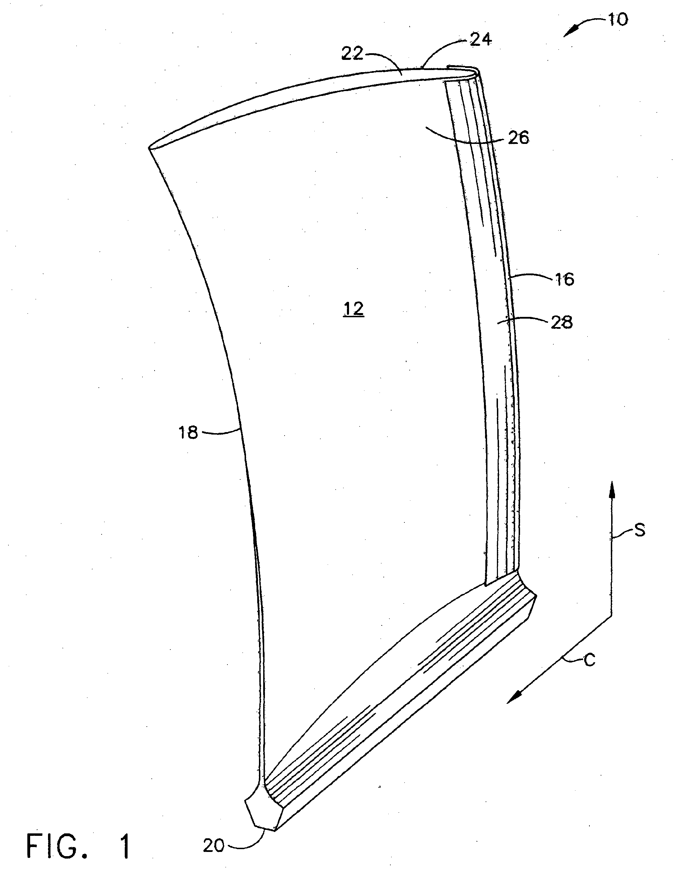

FIG. 1 is a composite fan blade 10 for a gas turbine engine having a composite airfoil 12 generally extending in a chordwise direction C from a leading edge 16 to a trailing edge 18. Airfoil 12 extends radially outward in a spanwise direction S from a root 20 to a tip 22 generally defining its span and having a suction side 24 and a pressure side 26. Airfoil 12 can be constructed from plies of composite material as is known in the art. Embodiments herein describe methods and tooling for making a titanium or titanium alloy metal leading edge (MLE) protective strip 28 for adhesion to airfoil leading edge 16. Though embodiments herein focus on composite fan blades, the methods, tooling and MLE protective strips herein are suitable for use with any composite airfoil, including blades and vanes.

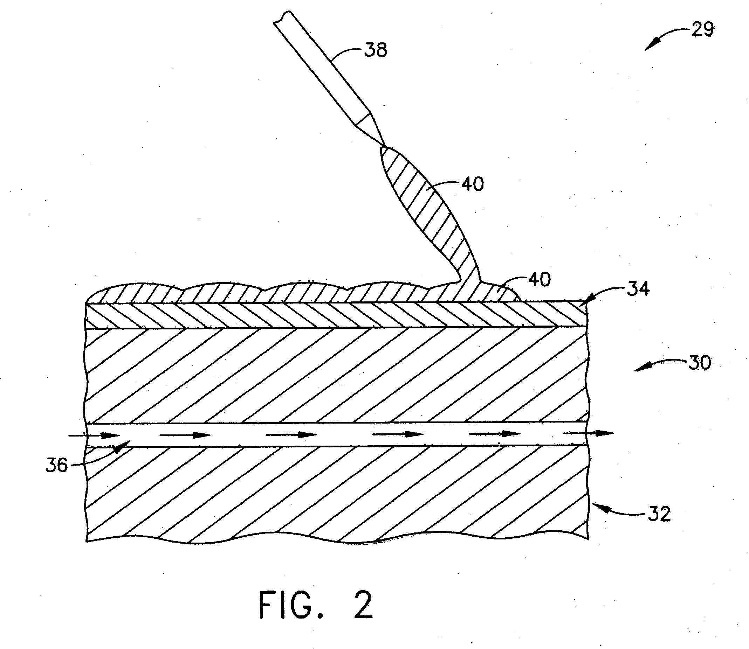

MLE protective strip 28 can be made using high temperature additive manufacturing processes. As used herein, "high temperature additive manufacturing" refers to processes including plasma transferred arc deposition, laser cladding, gas metal arc welding, ultrasonic welding, electron beam free-from fabrication, shaped metal deposition, and the like. Such processes have operating temperatures in excess of about 3000°C, which in the present case, is well above the melting point of the titanium or titanium alloy metallic deposit. To overcome the previously described issues common to such processes when working with high melting point and/or reactive materials, unique tooling must be employed. FIG. 2 is a schematic representation of a high temperature additive manufacturing system comprising tooling system 30 suitable for use in conjunction with high temperature additive manufacturing of titanium and titanium alloys.

More particularly, tooling system 30 includes a mandrel 32, a metallic cladding 34, and at least one cooling channel 36 for use with a high temperature additive manufacturing device 38. Mandrel 32 can receive a metallic deposit 40 and can have a shape corresponding to the desired shape of MLE protective strip 28. Mandrel 32 can be single-use or reusable, and can be made from any metallic or nonmetallic material. To help prevent contamination of metallic deposit 40, mandrel 32 should have a thermal conductivity that is at least about two times the thermal conductivity of the metallic deposit. This difference in thermal conductivity can also allow mandrel 32 to serve as a heat sink, thereby providing a larger process window for making a sound deposit without fusion to the mandrel when compared to current practices. Some examples of suitable "metallic materials" for mandrel 32 include, but should not be limited to, titanium, titanium alloy, molybdenum, tungsten, mild steel, and copper, while some examples of suitable nonmetallic materials include, but should not be limited to, graphite, silicon carbide, and carbon-carbon composite.

Metallic cladding (or "cladding") 34 comprises a thin layer of the titanium or titanium alloy in metallic deposit 40 applied to mandrel 32. Cladding 34 serves to further prevent contamination of metallic deposit 40. Cladding 34 can be applied to mandrel 32 by a variety of methods, including plasma spray, roll bonding, plasma transferred arc deposition, arc weld overlay (shielded metal arc welding (SMAW), gas metal arc welding (GMAW), gas tungsten arc welding (GTAW)), flame spray, and physical vapor deposition (PVD). The thickness of cladding 34 can range from about 2 microns to about 2mm, and in one embodiment, from about 2 microns to about 1mm. Conventional heat transfer modeling can be used to determine the optimized coating thickness for the particular cladding material being used.

In addition to cladding 34, active cooling of mandrel 32 is desired to remove heat and further help prevent fusion of MLE protective strip 28 to mandrel 32 and cladding 34. Active cooling can also be used help control grain size of the deposit material and optimize the mechanical and corrosion performance of MLE protection strip 28. Active cooling is according to the present invention, accomplished through the use of at least one cooling channel 36 in association with mandrel 32. Such cooling channels 36 can be attached to mandrel 32, embedded into mandrel 32 (as shown in FIG. 2), machined into mandrel 32, or some combination thereof. An active cooling medium can then be passed through cooling channel 36 (as indicated by arrows) to remove heat from mandrel 32. The active cooling medium can be a liquid, such as water or glycol, or a gas, such as argon, nitrogen, air, or helium.

In use, high temperature additive manufacturing device 38 can be positioned above tooling system 30 for providing metallic deposit 40. The application of metallic (titanium or titanium alloy) deposit 40 to mandrel 32 can be accomplished using conventional techniques as described previously. Once cooled to about ambient temperatures, the resulting near net shape MLE protective strip 28 can be processed further. In one embodiment, MLE protective strip 28 may be finished to final dimensions using conventional methods (e.g. machining) before being removed from mandrel 32 and attached to airfoil leading edge 16. In another embodiment, any required finishing operations can be carried out after protective strip 28 is attached to airfoil leading edge 16. MLE protective strip 28 can then be operably connected to airfoil leading edge 16 using a variety of conventional methods.

The embodiments herein offer benefits over conventional MLE protective strip manufacturing technologies. More particularly, additive manufacturing allows for the leading edge protective strip to be built up to near net shape, thereby reducing material input, material waste, and overall manufacturing time. Applying only the amount of material needed to complete the component conserves expensive raw materials, and material removal and finishing needs (e.g. machining) are drastically reduced. Moreover, additive manufacturing allows for flexibility in changing or updating the design of the MLE protective strip quickly and at a low cost when compared to conventional machining methods. Furthermore, utilizing additive manufacturing processes allows the MLE protective strip to be functionally graded in composition to tailor the properties and structure, thereby allowing advanced design capability.

This written description uses examples to disclose the invention, including the best mode, and also to enable any person skilled in the art to make and use the invention. The patentable scope of the invention is defmed by the claims, and may include other examples that occur to those skilled in the art. Such other examples are intended to be within the scope of the claims.

## Claims

1. A high temperature additive manufacturing system (29) for making a component comprising titanium or a titanium alloy, wherein the system (29) comprises:
a metallic deposit (40) comprising titanium or a titanium alloy;
a high temperature additive manufacturing device (38) for application of the metallic deposit (40); and
a tooling system (30) comprising:
a mandrel (32) for receiving the metallic deposit (40) from the high temperature additive manufacturing device (29), and providing shape to the metallic deposit (40);
**characterised in that** the system (29) further comprises:
at least one cooling channel (36) associated with the mandrel (32) for removing heat from the system (30); and
a metallic cladding (34) is applied to the mandrel (32) and comprising the same material as the metallic deposit (40), for thereby reducing contamination of the metallic deposit (40).

2. An additive manufacturing system (29) according to claim 1, wherein the mandrel (32) comprises a thermal conductivity at least two times greater than the thermal conductivity of the metallic deposit (40).

3. An additive manufacturing system (29) according to either of claim 1 or 2, wherein the mandrel (32) comprises a metallic material selected from the group consisting of titanium, titanium alloy, molybdenum, tungsten, mild steel, and copper, or a nonmetallic material selected from the group consisting of graphite, silicon carbide, and carbon-carbon composite.

4. An additive manufacturing system (29) according to any of claims 1 to 3, wherein the high temperature additive manufacturing device (38) is capable of carrying out a process selected from the group consisting of plasma transferred arc deposition, laser cladding, gas metal arc welding, ultrasonic welding, electron beam free-form fabrication, and shaped metal deposition.

5. An additive manufacturing system (29) according to any of claims 1 to 4, wherein the high temperature additive manufacturing device (38) comprises an operating temperature above 3000°C.

6. An additive manufacturing system (29) according to any of claims 1 to 5, wherein the metallic cladding (34) is applied to the mandrel (32) using a process selected from the group consisting of plasma spray, roll bonding, plasma transferred arc deposition, arc weld overlay, flame spray, and physical vapor deposition.

7. An additive manufacturing system (29) according to any of claims 1 to 6, wherein the cladding (34) comprises a thickness of from 2 microns to 2mm.

8. An additive manufacturing system (29) according to any of claims 1 to 7, comprising more than one cooling channel (36).

## Patentansprüche

1. Additives Hochtempertatur-Herstellungssystem (29) zum Herstellen einer Komponente, umfassend Titan oder eine Titanlegierung, wobei das System (29) Folgendes umfasst:
eine Metallablagerung (40), umfassend Titan oder eine Titanlegierung;
eine additive Hochtemperatur-Herstellungsvorrichtung (38) zum Aufbringen der Metallablagerung (40); und
ein Werkzeugsystem (30), Folgendes umfassend:
einen Formkern (32) zum Erhalten der Metallablagerung (40) aus der Hochtemperatur-Herstellungsvorrichtung (29) und zum Verleihen einer Form an die Metallablagerung (40);
**dadurch gekennzeichnet, dass** das System (29) ferner Folgendes umfasst:
wenigstens einen Kühlkanal (36), verknüpft mit dem Formkern (32), zum Abführen von Wärme aus dem System (30); und
eine Metallverkleidung (34) auf dem Formkern (32) aufgebracht wird,
umfassend dasselbe Material wie in der Metallablagerung (40), um somit eine Verunreinigung der Metallablagerung (40) zu verringern.

2. Additives Herstellungssystem (29) nach Anspruch 1, wobei der Formkern (32) eine Wärmeleitfähigkeit aufweist, die wenigstens doppelt so hoch ist wie die Wärmeleitfähigkeit der Metallablagerung (40).

3. Additives Herstellungssystem (29) nach einem der Ansprüche 1 oder 2, wobei der Formkern (32) ein metallisches Material umfasst, ausgewählt aus der Gruppe bestehend aus Titan, einer Titanlegierung, Molybdän, Wolfram, Flussstahl und Kupfer, oder einem nichtmetallischen Material, ausgewählt aus der Gruppe bestehend aus Graphit, Siliciumcarbid und einem Kohlenstoff/Kohlenstoff-Verbundmaterial.

4. Additives Herstellungssystem (29) nach einem der Ansprüche 1 bis 3, wobei die additive Hochtemperatur-Herstellungsvorrichtung (38) in der Lage ist, einen Vorgang auszuführen, ausgewählt aus der Gruppe bestehend aus plasmaübertragener Lichtbogenabscheidung, Laserauftragschweißen, Metallschutzgasschweißen, Ultraschallschweißen, Elektronenstrahl-Freeform-Fabrication und Formmetallauftragen.

5. Additives Herstellungssystem (29) nach einem der Ansprüche 1 bis 4, wobei die additive Hochtemperatur-Herstellungsvorrichtung (38) eine Betriebstemperatur von über 3.000 °C aufweist.

6. Additives Herstellungssystem (29) nach einem der Ansprüche 1 bis 5, wobei die Metallverkleidung (34) mit einem Vorgang auf den Formkern (32) aufgetragen wird, der ausgewählt ist aus der Gruppe bestehend aus Plasmaspritzen, Walzplattieren, plasmaübertragener Lichtbogenabscheidung, Lichtbogenschweiß-Überlagerung, Flammspritzen und physikalischer Gasphasenabscheidung.

7. Additives Herstellungssystem (29) nach einem der Ansprüche 1 bis 6, wobei die Verkleidung (34) eine Stärke von zwischen 2 pm und 2 mm aufweist.

8. Additives Herstellungssystem (29) nach einem der Ansprüche 1 bis 7, umfassend mehr als einen Kühlkanal (36).

## Revendications

1. Système de fabrication d'additif à haute température (29) pour fabriquer un composant comprenant du titane ou un alliage de titane, dans lequel le système (29) comprend :
un dépôt métallique (40) comprenant du titane ou un alliage de titane ;
un dispositif de fabrication d'additif à haute température (38) pour application du dépôt métallique (40) ; et
un système d'outillage (30) comprenant :
un mandrin (32) pour recevoir le dépôt métallique (40) du dispositif de fabrication d'additif à haute température (29) et conférer une forme au dépôt métallique (40) ;
**caractérisé en ce que** le système (29) comprend en outre :
au moins un canal de refroidissement (36) associé au mandrin (32) pour éliminer la chaleur du système (30) ; et
un plaquage métallique (34) est appliqué au mandrin (32), qui comprend le même matériau que le dépôt métallique (40) pour ainsi réduire la contamination du dépôt métallique (40).

2. Système de fabrication d'additif (29) selon la revendication 1, dans lequel le mandrin (32) comprend une conductibilité thermique au moins deux fois supérieure à la conductibilité thermique du dépôt métallique (40).

3. Système de fabrication d'additif (29) selon l'une quelconque des revendications 1 ou 2, dans lequel le mandrin (32) comprend un matériau métallique choisi dans le groupe constitué du titane, d'un alliage de titane, du molybdène, du tungstène, de l'acier doux et du cuivre, ou un matériau non métallique choisi dans le groupe constitué du graphite, du carbure de silicium et d'un composite carbone-carbone.

4. Système de fabrication d'additif (29) selon l'une quelconque des revendications 1 à 3, dans lequel le dispositif de fabrication d'additif à haute température (38) est à même d'effectuer un procédé choisi dans le groupe constitué d'un dépôt par plasma à arc transféré, d'un plaquage au laser, d'un soudage à l'arc métallique sous protection gazeuse, d'un soudage ultrasonique, de la fabrication en forme libre par faisceau électronique et d'un dépôt de métal moulé.

5. Système de fabrication d'additif (29) selon l'une quelconque des revendications 1 à 4, dans lequel le dispositif de fabrication d'additif à haute température (38) comprend une température d'exploitation supérieure à 3 000 °C.

6. Système de fabrication d'additif (29) selon l'une quelconque des revendications 1 à 5, dans lequel le plaquage métallique (34) est appliqué au mandrin (32) en utilisant un procédé choisi dans le groupe constitué d'une pulvérisation au plasma, d'un laminage au rouleau, d'un dépôt au plasma à arc transféré, d'un recouvrement par soudage à l'arc, d'une pulvérisation à la flamme et d'un dépôt en vapeur physique.

7. Système de fabrication d'additif (29) selon l'une quelconque des revendications 1 à 6, dans lequel le plaquage (34) comprend une épaisseur de 2 µm à 2 mm.

8. Système de fabrication d'additif (29) selon l'une quelconque des revendications 1 à 7, comprenant plus d'un canal de refroidissement (36).
